# EUROPÄISCHE PATENTSCHRIFT

(11) **EP 3 393 016 B1**
(45) Veröffentlichungstag und Bekanntmachung des Hinweises auf die Patenterteilung: **21.04.2021**
(21) Anmeldenummer: 18157981.4
(22) Anmeldetag: 22.02.2018
(51) Int. Cl.: H02K 15/00, H02K 17/16

(54) **VERFAHREN ZUR HERSTELLUNG EINES KURZSCHLUSSROTORS UND KURZSCHLUSSROTOR**
SHORT CIRCUIT ROTOR AND METHOD FOR PRODUCING A SHORT CIRCUIT ROTOR
PROCÉDÉ DE FABRICATION D'UN ROTOR À COURT-CIRCUIT ET ROTOR À COURT-CIRCUIT

(30) Priorität: 18.04.2017 DE 102017206520
(43) Veröffentlichungstag der Anmeldung: 24.10.2018
(73) Patentinhaber: AUDI AG, 85045 Ingolstadt (DE)
(72) Erfinder: Weber, Korbinian, 85049 Ingolstadt (DE); Rücker, Jörg, 91161 Hilpoltstein (DE)

(56) Entgegenhaltungen:
- WO-A1-2015/172920
- DE-A1-102005 030 798
- JP-B2- 3 480 185
- US-A- 3 705 971
- US-A1- 2014 132 105
- US-B1- 9 570 968

## Beschreibung

Die Erfindung betrifft ein Verfahren zur Herstellung eines Kurzschlussrotors und einen Kurzschlussrotor, insbesondere für eine Asynchronmaschine.

Im Stand der Technik wurden bereits verschiedene Bauweisen für Kurzschlusskäfige in den Kurzschlussrotoren von Asynchronmaschinen aus Kupfer- und/oder Aluminium-Halbzeugen vorgeschlagen.

DE 10 2013 005 050 A1 offenbart einen Kurzschlussläufer sowie ein Verfahren zur Herstellung eines Kurzschlussläufers, wobei zumindest ein Teil eines Kurzschlussringes aus einem Scheibenpaket besteht, welches lagenweise aus Scheiben mit Ausnehmungen aufgebaut ist, durch welche die Enden der Käfigstäbe aus dem Läuferblechpaket hindurchtreten. Die Stirnseiten der Scheiben eines Kurzschlussringes über den Außenumfang weisen zumindest eine Fase auf, welche sich radial zumindest bis zu den aus dem Läuferblechpaket ragenden Stabenden der Käfigstäbe erstreckt. Mit anderen Worten erstreckt sich eine frei zugängliche Öffnung zwischen benachbarten Scheiben bis auf das Niveau der Käfigstäbe, um die Einzelteile sowohl elektrisch wie auch mechanisch miteinander fügen zu können.

DE 10 2014 013 684 A1 betrifft einen Kurzschlussläufer für eine Asynchronmaschine, bei dem ebenso mehrere stirnseitig an das Läuferblechpaket angebrachte Kurzschlussringe mit Ausnehmungen, in die die Endbereiche der Läuferstege hineinragen, vorgesehen sind. Vorgeschlagen wird, dass die Kurzschlussringe jeweils aus mindestens zwei Metallverbundscheiben bestehen, welche mindestens aus einer ersten Metallscheibe und einer mit dieser flächig verbundenen, werkstoffverschiedenen zweiten Metallscheibe bestehen.

Ein Vorteil einer derartigen Ausgestaltung ist dabei die Möglichkeit, verschiedene Werkstoffe in den Kurzschlussringen einzusetzen, beispielsweise Kupferscheiben mit legierten Kupferscheiben (CuCrZr oder ähnliche Legierungen) zu kombinieren, um die Drehzahlfähigkeit und Temperaturbeständigkeit der Asynchronmaschine zu steigern. Nachteilhaft ist jedoch, dass durch den dort vorgeschlagenen Schweißprozess die Eigenschaften von legierten Kupfer- und/oder Aluminiumscheiben verändert werden. Durch die Erwärmung dieser Art von Legierungen auf die Schweißtemperatur verlieren diese insbesondere ihre Eigenschaften bezüglich der Festigkeit und der Temperaturstabilität. Setzt man einen Läufer mit relativ dünnen, gut herzustellenden Einzelscheiben voraus, bleibt nach dem Verschweißen von den legierten Einzelscheiben nur ein verhältnismäßig geringer Teil mit den ursprünglich gewollten Eigenschaften zurück.

US 2014/0339950 A1 betrifft eine Rotoranordnung mit Endkappen, die elektronenstrahlgeschweißt sein sollen. Auf diese Weise sollen verbesserte elektrische und mechanische Eigenschaften bei einer niedergewichtigen Anordnung entstehen. Konkret wird eine einzige Endscheibe mit axial nicht durchgehende Nuten beschrieben.

Hierbei ist nachteilhaft, dass der Schweißprozess direkt am Rotorblechpaket und in den halb-offenen Nuten der Kurzschlussscheibe stattfindet. Auf diese Weise entsteht ein sehr hoher Wärmeeintrag in das Blechpaket, der zu einer Isolationsbeschädigung führen kann. Das flüssige Schweißbad kann nur sehr begrenzt geführt werden und verläuft leicht.

DE 10 2013 202 557 A1 betrifft einen Kurzschlusskäfig für einen Kurzschlussläufer und ein Herstellungsverfahren desselben. Dabei wird vorgeschlagen, die Kurzschlussringe aus einer Verbindungsscheibe und einer Kurzschlussscheibe zusammenzusetzen, wobei die Verbindungsscheibe eine Mehrzahl von Ausnehmungen aufweist, in denen jeweils ein Käfigstab angeordnet ist, so dass die Mehrzahl von Käfigstäben mit Bezug zu der Verbindungsscheibe mechanisch fixiert ist. Die Kurzschlussscheibe liegt in axialer Richtung unmittelbar an der Verbindungsscheibe an. Eine stoffschlüssige Verbindung zwischen den Käfigstäben und der Verbindungsscheibe soll mittels einer Schweißverbindung erfolgen, eine stoffschlüssige Verbindung zwischen der Verbindungsscheibe und der Kurzschlussscheibe mittels einer Lötverbindung.

Auch hier findet mithin ein Schweißen nahe am Rotorblechpaket statt, was im Hinblick auf die Isolation und die Schweißbadführung zu Schwierigkeiten führen kann. Speziell in dieser Ausführungsform wird nur die verhältnismäßig dünne Verbindungsscheibe mit den Kurzschlussstäben vorzugsweise aus axialer Richtung verschweißt. Dies erhöht das Risiko eines Verlaufen des Schweißbades weiter, da selbst bei geringen Toleranzabweichungen oder leichten Abweichungen der Schweißparameter das Schmelzbad in die Fugen zwischen Kurzschlussstab und Blechpaket bzw. Verbindungsscheibe und Blechpaket verläuft. Es tritt mithin ein hoher Wärmeeintrag in das Rotorblechpaket auf. Ein weiterer Nachteil ist, dass die Lötverbindungen der Kurzschlussscheibe mit der Verbindungsscheibe zu einer geringeren Festigkeit und elektrischen Leitfähigkeit im Vergleich zu Schweißverbindungen führen. Da die Kurzschlussscheibe den Großteil des elektrisch leitenden Ringquerschnittes ausmacht, wirkt aber vor allem auf diese Scheibe eine verhältnismäßig große Fliehkraft.

WO 2015/172920 A1 offenbart ein Verfahren zur Herstellung eines Kurzschlussrotors, bei dem Kurzschlussstäbe in axiale Öffnungen eines Blechpakets eingeführt werden, gefolgt von der Platzierung und Verschweissung eines Zweikomponenten-Kurzschlussrings.

US 3 705 971 A offenbart ein Verfahren zur Herstellung eines Kurzschlussrotors, bei dem Kurzschlussstäbe in axiale Öffnungen eines Blechpakets eingeführt werden, gefolgt von der Verschweissung durch Elektronenstrahlschweissen von Kurzschlussring und Kurzschlussstäbe.

JP 3 480185 B2 offenbart ein Verfahren zur Herstellung eines Kurzschlussrotors, bei dem Kurzschlussstäbe in axiale Öffnungen eines Blechpakets eingeführt werden, gefolgt von der Verschweissung durch Elektronenstrahlschweissen von Kurzschlussring und Kurzschlussstäbe.

US 2014/132105 A1 offenbart ein Verfahren zur Herstellung eines Kurzschlussrotors, bei dem Kurzschlussstäbe in axiale Öffnungen eines Blechpakets eingeführt werden, gefolgt von der Platzierung eines Spannrings um den Kurzschlussring.

Der Erfindung liegt daher die Aufgabe zugrunde, ein verbessertes, kostengünstig und einfach realisierbares Herstellungsverfahren und einen entsprechend hergestellten verbesserten Kurzschlussrotor anzugeben.

Zur Lösung dieser Aufgabe ist erfindungsgemäß ein Verfahren zur Herstellung eines Kurzschlussrotors, nach Ansrpuch 1, umfassend folgende Schritte vorgesehen:
- Bereitstellen eines Rotorblechpakets mit Durchgangsöffnungen für Kurzschlussstäbe eines Kurzschlusskäfigs sowie der Kurzshlussstäbe,
- Einbringen der Kurzschlussstäbe in die Durchgangsöffnungen derart, dass auf beiden Seiten ein axialer Überstand verbleibt,
- Beidseitiges Aufsetzen einer Hauptscheibe mit Durchgangsöffnungen für die Kurzschlussstäbe, deren axiale Länge dem Überstand entspricht, sowie einer unmittelbar an die Hauptscheibe und die Enden der Kurzschlussstäbe anschließenden durchgängigen Randscheibe, wobei die Hauptscheibe und die Randscheibe einen Kurzschlussring des Kurzschlusskäfigs bilden,
- Verschweißen wenigstens der Hauptscheibe und der Randscheibe mittels radial umlaufenden Elektronenstrahlschweißens.

Durch den Schweißvorgang werden mithin alle Bauteile des Kurzschlussringes (Hauptscheibe, Randscheibe, Kurzschlussstäbe) verschweißt. Erfindungsgemäß wird vorgeschlagen, eine Hauptscheibe mit Aussparungen für die Kurzschlussstäbe zu verwenden und diese mit einer durchgängigen, mithin keine Aussparungen/Durchgangsöffnungen/Nuten für die Kurzschlussstäbe aufweisenden Randscheibe zu kombinieren, wobei die Hauptscheibe und die Randscheibe mittels radialem Elektronenstrahlschweißens verbunden werden. Auf diese Weise ist es möglich, den gesamten, idealerweise verpressten Verbund aus Blechpaket, Kurzschlussstäben und den jeweiligen Kurzschlussringen mit nur einer Schweißnaht komplett zu fügen. Dabei ist die Stablänge der Kurzschlussstäbe und die Verpresskraft des Verbundes so zu dimensionieren, dass ein axialer Kontakt zwischen jedem Kurzschlussstab und der Randscheibe entsteht.

Eine bevorzugte Weiterbildung der Erfindung sieht mithin vor, dass der Kurzschlussrotor vor dem Verschweißen der Hauptscheibe und der Randscheibe axial so verpresst wird, dass die Enden der Kurzschlussstäbe stoffschlüssig an der Randscheibe anliegen. Für das Aufbringen einer derartigen axialen Vorspannung kann eine Spannvorrichtung verwendet werden.

Hierdurch ergeben sich eine Vielzahl von Vorteilen gegenüber dem Stand der Technik. So wird im Vergleich zu einer Ausgestaltung mit einer einzigen Scheibe mit axial nicht durchgehenden Nuten der Abstand der Schweißnaht vom Blechpaket durch die Hauptscheibe vergrößert, so dass der Wärmeeintrag in das Rotorblechpaket reduziert wird. Weiterhin wird durch die mit der Randscheibe verpresste Hauptscheibe dem entstehenden Schweißbad keine Möglichkeit gegeben, zu verlaufen, nachdem in eine solide, geschlossene Geometrie eingeschweißt wird.

Im Vergleich zu Ausgestaltungen mit nur Durchgangsöffnungen aufweisenden Scheiben in den Kurzschlussringen ergibt sich der Vorteil, dass je Kurzschlussring nur eine Scheibe mit Aussparungen über Stanzprozesse mit entsprechendem Verschnitt hergestellt werden muss. Die Randscheibe kann kostengünstiger, beispielsweise als Abschnitt eines beispielsweise stanggepressten Profils erzeugt werden. Weiterhin wird die Prozesszeit des kostenintensiven Elektronenstrahlschweißens auf nur eine einzige umlaufende Schweißnaht reduziert. Ein weiterer Vorteil besteht darin, dass die Randscheibe eine durchgehende Stützscheibe ohne Aussparungen für die Kurzschlussstäbe bildet, so dass die Drehzahlfestigkeit über höherfeste Materialien effektiver erhöht werden kann. Denn es bleibt ein höherer Anteil eines insbesondere höherfesten Materials der Randscheibe bestehen, was zu einer höheren Drehzahlfestigkeit führt. Ferner werden beim Einsatz von höherfesten Scheibenmaterialien durch nur eine einzige, radiale Elektronenstrahlschweißnaht das höherfeste Material und insgesamt die Eigenschaften des Materialies der Hauptscheibe und der Randscheibe besser erhalten.

Gegenüber Ausgestaltungen, in denen die Kurzschlussstäbe an Verbindungsscheiben angeschweißt werden und anschließend die Kurzschlussscheiben an die Verbindungsscheiben gelötet werden, ergibt sich der Vorteil, dass die Arbeitsschrittzahl deutlich reduziert wird, nachdem gemäß der vorliegenden Erfindung alle Scheiben in einem Schritt aufeinandergesetzt und anschließend durch einen einzigen Verschweißschritt mittels eines radial gerichteten und tangential umlaufenden Elektronenstrahls verschweißt werden. Hierdurch ergibt sich eine höhere Festigkeit und elektrische Leitfähigkeit der Verbindung zwischen der Hauptscheibe und der Randscheibe, nachdem ein Schweißverfahren statt einem Lötverfahren verwendet wird. Der Wärmeeintrag in das Rotorblechpaket beim Schweißen ist reduziert, nachdem die Schweißverbindung nicht direkt am Rotorblechpaket besteht und zudem radial gerichtet ist. Alle Bauteile werden in einem einzigen Schritt gefügt, ohne dass ein zusätzliches Fügematerial erforderlich wäre. Es ist mithin ein einfach und kostengünstig zu realisierendes Herstellungsverfahren beschrieben, das in einem Kurzschlussrotor mit optimalen Eigenschaften hinsichtlich der Leitfähigkeit des Kurzschlussringes, der Verbindungen und der Drehfestigkeit resultiert.

Um die Drehfestigkeit weiter zu erhöhen, sieht eine vorteilhafte Weiterbildung der Erfindung vor, dass nach dem Verschweißen jeweils ein Spannring um ein Paar aus Hauptscheibe und Randscheibe gelegt und festgezogen wird. Ein solcher Spannring kann beispielsweise aus Stahl-. Titan- oder Nickelbasierten Werkstoffen oder einer ähnlichen Legierung bestehen und erhöht die Drehfestigkeit insbesondere dann, wenn sowohl die Randscheibe als auch die Hauptscheibe nicht aus höherfesten Materialien gefertigt sind, sondern beispielsweise beide einfache Kupfer- und/oder Aluminiumscheiben sind, ohne höherfeste Legierungen wie beispielsweise CuCrZr. Mithin eröffnet die Verwendung eines Spannrings die Möglichkeit, die Hauptscheibe und die Randscheibe auch aus demselben, hochleitfähigen Material zu realisieren, während die erforderliche Drehfestigkeit über den Spannring erreicht wird.

Selbstverständlich sind jedoch auch Ausgestaltungen denkbar, in der in der Hauptscheibe und/oder insbesondere der Randscheibe höherfeste Materialien, wie beispielsweise CuCrZr oder auch Stahl, verwendet werden.

Bezüglich der Dicken der Hauptscheibe und der Randscheibe sind ebenso verschiedene Ausgestaltungen denkbar. Eine Ausgestaltung mit einer Hauptscheibe, deren Dicke, also axiale Erstreckung, größer ist als die der Randscheibe, kann den Vorteil haben, dass die Hauptscheibe einen größeren Abstandshalter zum Rotorblechpaket bildet, welches durch das Schweißen weniger beeinflusst wird. Eine dünnere Hauptscheibe, insbesondere im Vergleich zur Randscheibe, hat den Vorteil, dass es leichter ermöglicht wird, die Durchgangsöffnungen der Hauptscheibe auszustanzen. Ein Ausstanzen ist jedoch nicht zwangsläufig notwendig, denn beispielsweise können dickere Hauptscheiben auch als Abschnitte eines stranggepressten Profils durch entsprechendes Ablängen erzeugt werden. In der Praxis hat es sich als vorteilhaft erwiesen, ein günstiges Fertigungsverfahren für die Hauptscheibe zu verwenden, mithin diese eher dünn zu wählen und somit leicht zu stanzen.

Neben dem Verfahren betrifft die Erfindung auch einen nach dem erfindungsgemäßen Verfahren hergestellten Kurzschlussrotor, nach Anspruch 4, aufweisend ein Rotorblechpaket und einen Kurzschlusskäfig mit sich durch Durchgangsöffnungen im Rotorblechpaket erstreckenden Kurzschlussstäben und die Kurzschlussstäbe axial beidseitig kurzschließenden Kurzschlussringen, wobei jeder Kurzschlussring eine Hauptscheibe mit Durchgangsöffnungen, durch die sich die aus dem Rotorblechpaket überstehenden Kurzschlussstäbe insbesondere formschlüssig erstrecken, und eine axial nach außen unmittelbar auf die Hauptscheibe folgende Randscheibe, an der die Kurzschlussstäbe stoffschlüssig anliegen, aufweist, welche sich dadurch auszeichnet, dass die Randscheibe und die Hauptscheibe radial elektronenstrahlverschweißt sind. Die Ausführungen zum Herstellungsverfahren lassen sich analog auf den Kurzschlussrotor übertragen. Insbesondere wird ein fügematerialloses Fügeverfahren verwendet, welches entfernt vom Rotorblechpaket stattfindet, so dass ein Kurzschlussrotor mit deutlich verbesserten Eigenschaften in einem einfachen Herstellungsverfahren gefertigt wurde.

Vorzugsweise können die Randscheibe und/oder die Hauptscheibe aus Kupfer und/oder Aluminium und/oder einer Kupfer und/oder Aluminium umfassenden Legierung bestehen. Die Ausführungen bezüglich des Herstellungsverfahrens gelten auch hier entsprechend fort. Ein bevorzugtes Ausführungsbeispiel sieht vor, dass die Randscheibe aus einem höherfesten Material als die Hauptscheibe besteht und somit als Stützscheibe wirkt.

Eine besonders zweckmäßige Ausgestaltung ergibt sich, wenn, insbesondere bei nicht aus einer höherfesten Legierung und/oder bei aus gleichen Materialien bestehender Hauptscheibe und Randscheibe, der Kurzschlussring durch einen Spannring radial umgeben ist. Insbesondere wird es dadurch ermöglicht, die Hauptscheibe und die Randscheibe als Kupfer- und/oder Aluminiumscheiben zu realisieren und dennoch die benötigte Drehfestigkeit anhand des Spannrings zu erreichen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Explosionszeichnung einer Seite eines erfindungsgemäßen Kurzschlussrotors,
- Fig. 2: eine perspektivische Ansicht der Seite des gefügten erfindungsgemäßen Kurzschlussrotors, und
- Fig. 3: eine Querschnittsansicht der Seite des erfindungsgemäßen Kurzschlussrotors.

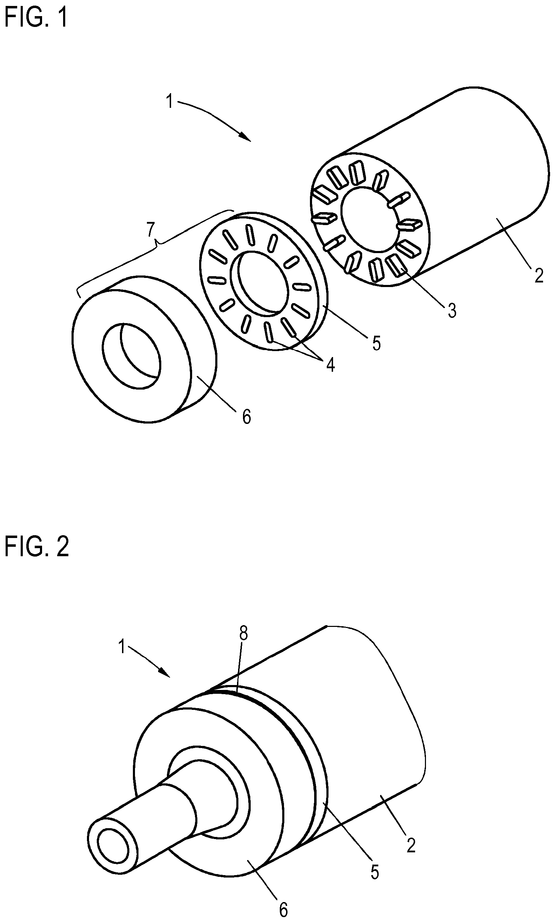

Fig. 1 zeigt wesentliche Komponenten einer Seite eines erfindungsgemäßen Kurzschlussrotors 1 in einer Explosionsansicht, wobei sich die nicht gezeigte, axial gegenüberliegende Seite des Kurzschlussrotors 1 spiegelbildlich ergibt. Der Kurzschlussrotor 1 umfasst vor der Fügung seiner hier gezeigten Komponenten ein Rotorblechpaket 2, wie es im Stand der Technik grundsätzlich bekannt ist. Das Rotorblechpaket 2 weist Durchgangsöffnungen auf, in die hier bereits Kurzschlussstäbe 3 eines Kurzschlusskäfigs des Kurzschlussrotors 1 eingesetzt sind. Die Kurzschlussstäbe 3 stehen axial auf beiden Seiten ersichtlich über, um in Durchgangsöffnungen beziehungsweise Aussparungen 4 einer Hauptscheibe 5 formschlüssig eingreifen zu können. Den axialen Abschluss des Kurzschlussrotors 1 bildet eine Randscheibe 6, die keinerlei Aussparungen beziehungsweise Öffnungen für die Kurzschlussstäbe 3 aufweist, nachdem jene stoffschlüssig an ihr anliegen sollen. Die Hauptscheibe 5 und die Randscheibe 6 bilden den Kurzschlussring 7 des Kurzschlusskäfigs.

Um den Kurzschlussrotor 1 zu fertigen, werden die in Explosionsansicht gezeigten Bauteile axial zusammengesetzt und mittels einer Spannvorrichtung verpresst, so dass nicht nur die Hauptscheibe 5 stoffschlüssig an der Randscheibe 6 anliegt, sondern auch die Kurzschlussstäbe 3 stoffschlüssig an der Randscheibe 6 anliegen. Derartig durch die Spannvorrichtung vorgespannt erfolgt dann ein radiales Elektronenstrahlschweißen zur Fügung der Hauptscheibe 5 an die Randscheibe 6. Eine perspektivische Ansicht des entsprechend in nur einem Schritt gefügten Kurzschlussrotors 1 zeigt Fig. 2. Angedeutet ist dort auch die Schweißnaht 8 zwischen der Hauptscheibe 5 und der Randscheibe 6, wobei sich das Elektronenstrahlschweißen auch auf eine Verbindung der Kurzschlussstäbe 3 mit der Randscheibe 6 erstreckt.

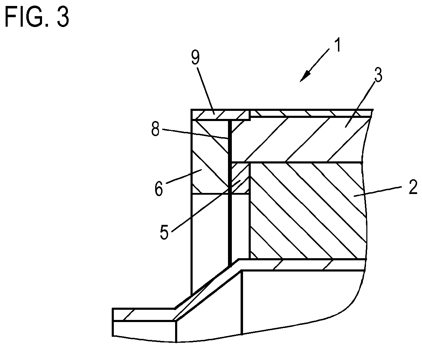

Dies ist in der Querschnittsansicht des gefügten Kurzschlussrotors 1 in Fig. 3 deutlich zu erkennen, nachdem sich die Schweißnaht 8 auch über die Kurzschlussstäbe 3 erstreckt.

Im vorliegenden Ausführungsbeispiel ist die Hauptscheibe 5 dünner als die Randscheibe 6 gewählt, so dass die Durchgangsöffnungen 4 der Hauptscheibe 5 gestanzt werden können. Es ist auch eine Ausgestaltung denkbar, in der die Hauptscheibe 5 dicker als die Randscheibe 6 ist, um einen größeren Abstand zum Blechpaket 2 beim Schweißen zu schaffen.

Radial um den Kurzschlussring 7 erstreckt sich auch ein in Fig. 3 angedeuteter Spannring 9. Die Verwendung eines solchen Spannrings 9 erweist sich dann als besonders vorteilhaft, wenn eine höhere Drehfestigkeit benötigt wird, als sie durch die Ausgestaltung der Scheiben 5, 6 geliefert wird, beispielsweise dann, wenn die Scheiben 5, 6 beide nicht aus einem höherfesten Material bestehen, sondern beispielsweise als einfache Kupfer- und/oder Aluminiumscheiben ausgebildet sind. Der Spannring 9 wird nach dem Elektronenstrahlschweißen über den Kurzschlussring 7 aus der Hauptscheibe 5 und der Randscheibe 6 aufgezogen werden.

Ein erfindungsgemäßer Kurzschlussrotor kann im allgemeinen in einer Asynchronmaschine eingesetzt werden, welche zudem einen entsprechenden Stator aufweist. Die Asynchronmaschine kann mit besonderem Vorteil innerhalb eines Kraftfahrzeugs verwendet werden.

## Patentansprüche

1. Verfahren zur Herstellung eines Kurzschlussrotors (1), umfassend folgende Schritte:
- Bereitstellen eines Rotorblechpakets (2) mit Durchgangsöffnungen für Kurzschlussstäbe (3) eines Kurzschlusskäfigs sowie der Kurzschlussstäbe (3),
- Einbringen der Kurzschlussstäbe (3) in die Durchgangsöffnungen derart, dass auf beiden Seiten ein axialer Überstand verbleibt,
- beidseitiges Aufsetzen einer Hauptscheibe (5) mit Durchgangsöffnungen (4) für die Kurzschlussstäbe (3), deren axiale Länge dem Überstand entspricht, sowie einer unmittelbar an die Hauptscheibe (5) und die Enden der Kurzschlussstäbe (3) anschließenden durchgängigen Randscheibe (6), wobei die Hauptscheibe (5) und die Randscheibe (6) einen Kurzschlussring (7) des Kurzschlusskäfigs bilden,
- Verschweißen der Hauptscheibe (5) und der Randscheibe (6) mittels radialen Elektronenstrahlschweißens, und
- Legen und Festziehen eines Spannrings (9) um ein Paar aus Hauptscheibe (5) und Randscheibe (6) nach dem Verschweißen.

2. Verfahren nach Anspruch 1,
**dadurch gekennzeichnet,**
**dass** der Kurzschlussrotor (1) vor dem Verschweißen der Hauptscheibe (5) und der Randscheibe (6) axial so verpresst wird, dass die Enden der Kurzschlussstäbe (3) stoffschlüssig an der Randscheibe (6) anliegen.

3. Verfahren nach Anspruch 1 oder 2,
**dadurch gekennzeichnet,**
**dass** die Durchgangsöffnungen (4) der Hauptscheibe (5) ausgestanzt werden.

4. Kurzschlussrotor (1), hergestellt nach einem Verfahren nach einem der vorangehenden Ansprüche, aufweisend ein Rotorblechpaket (2) und einen Kurzschlusskäfig mit sich durch Durchgangsöffnungen im Rotorblechpaket (2) erstreckenden Kurzschlussstäben (3) und die Kurzschlussstäbe (3) axial beidseitig kurzschließenden Kurzschlussringen, wobei jeder Kurzschlussring (7) eine Hauptscheibe (5) mit Durchgangsöffnungen (4), durch die sich die aus dem Rotorblechpaket (2) überstehenden Kurzschlussstäbe (3) insbesondere formschlüssig erstrecken, und eine axial nach außen unmittelbar auf die Hauptscheibe (5) folgende Randscheibe (6), an der die Kurzschlussstäbe (3) stoffschlüssig anliegen, aufweist,
**dadurch gekennzeichnet,**
**dass** die Randscheibe (6) und die Hauptscheibe (5) radial elektronenstrahlverschweißt sind, wobei der Kurzschlussring (7) durch einen Spannring (9) radial umgeben ist.

5. Kurzschlussrotor (1) nach Anspruch 4,
**dadurch gekennzeichnet,**
**dass** die Randscheibe (6) und/oder die Hauptscheibe (5) aus Kupfer und/oder Aluminium und/oder einer Kupfer und/oder Aluminium umfassenden Legierung bestehen und/oder dass die Randscheibe (6) aus einem höherfesten Material als die Hauptscheibe (5) besteht.

## Claims

1. Method for producing a short circuit rotor (1), comprising the following steps:
- providing a laminated rotor core (2) with through openings for shorting bars (3) of a squirrel cage as well as providing the shorting bars (3),
- inserting the shorting bars (3) into the through openings such that an axial overhang remains on both sides,
- placing a main disk (5) with through openings (4) on both sides for the shorting bars (3), whose axial length corresponds to the overhang, as well as a continuous edge disk (6) immediately adjacent to the main disk (5) and the ends of the shorting bars (3), wherein the main disk (5) and the edge disk (6) form a shorting ring (7) of the squirrel cage,
- welding the main disk (5) and the edge disk (6) by means of radially encircling electron beam welding, and
- placing and tensioning a tension ring (9) around a pair composed of the main disk (5) and edge disk (6) after welding.

2. Method according to claim 1,
**characterised in**
**that** the short circuit rotor (1) is axially compressed prior to the welding of the main disk (5) and the edge disk (6) so that the ends of the shorting bars (3) lie against the edge disk (6) with material bonding.

3. Method according to claim 1 or 2,
**characterised in**
**that** the through openings (4) of the main disk (5) are punched out.

4. Short circuit rotor (1), produced according to a method according to any of the preceding claims, having a laminated rotor core (2) and a squirrel cage with shorting bars (3) extending through continuous openings in the laminated rotor core (2) and shorting rings which axially short-circuit the shorting bars (3) on both sides, wherein each shorting ring (7) has a main disk (5) with through openings (4), through which the shorting bars (3) extend and project out from the laminated rotor core (2), especially in a formfitting manner, and an edge disk (6) following the main disk (5) immediately on the axially outer side, against which the shorting bars (3) lie in materially-bonded manner,
**characterised in**
**that** the edge disk (6) and the main disk (5) are radially welded together by electron beam welding, wherein the short circuit ring (7) is surrounded radially by a tension ring (9).

5. Short circuit rotor (1) according to claim 4,
**characterised in**
**that** the edge disk (6) and/or the main disk (5) are made of copper and/or aluminium and/or an alloy comprising copper and/or aluminium, and/or in that the edge disk (6) is made of a higher-strength material than the main disk (5).

## Revendications

1. Procédé de fabrication d'un rotor en court-circuit (1), comprenant les étapes suivantes :
- mise à disposition d'un paquet de tôles de rotor (2) avec des ouvertures de passage pour des barres de court-circuit (3) d'une cage de court-circuit ainsi que des barres de court-circuit (3),
- introduction des barres de court-circuit (3) dans les ouvertures de passage de telle sorte qu'un surplomb axial subsiste sur les deux faces,
- installation des deux côtés d'un disque principal (5) avec des ouvertures de passage (4) pour les barres de court-circuit (3) dont la longueur axiale correspond au surplomb, ainsi que d'un disque de bordure (6) continu se raccordant directement au disque principal (5) et aux extrémités des barres de court-circuit (3), dans lequel le disque principal (5) et le disque de bordure (6) forment une bague de court-circuit (7) de la cage de court-circuit,
- soudage du disque principal (5) et du disque de bordure (6) au moyen d'un soudage à faisceaux d'électrons radial, et
- pose et serrage d'une bague de serrage (9) autour d'une paire du disque principal (5) et du disque de bordure (6) après le soudage.

2. Procédé selon la revendication 1,
**caractérisé en ce que**
le rotor en court-circuit (1) est comprimé axialement avant le soudage du disque principal (5) et du disque de bordure (6) de sorte que les extrémités des barres de court-circuit (3) s'appuient par complémentarité de matières au niveau du disque de bordure (6).

3. Procédé selon la revendication 1 ou 2,
**caractérisé en ce que**
les ouvertures de passage (4) du disque principal (5) sont découpées.

4. Rotor en court-circuit (1) fabriqué selon un procédé selon l'une des revendications précédentes, présentant un paquet de tôles de rotor (2) et une cage de court-circuit avec des barres de court-circuit (3) s'étendant à travers des ouvertures de passage dans le paquet de tôles de rotor (2) et les bagues de court-circuit court-circuitant axialement des deux côtés les barres de court-circuit (3), dans lequel chaque bague de court-circuit (7) présente un disque principal (5) avec des ouvertures de passage (4), à travers lesquelles les barres de court-circuit (3) saillant du paquet de tôles de rotor (2) s'étendent en particulier par complémentarité de formes, et un disque de bordure (6) suivant axialement vers l'extérieur directement le disque principal (5), disque de bordure au niveau duquel les barres de court-circuit (3) s'appuient par complémentarité de matières,
**caractérisé en ce que**
le disque de bordure (6) et le disque principal (5) sont soudés par faisceaux d'électrons radialement, dans lequel la bague de court-circuit (7) est entourée radialement par une bague de serrage (9).

5. Rotor en court-circuit (1) selon la revendication 4,
**caractérisé en ce que**
le disque de bordure (6) et/ou le disque principal (5) sont composés de cuivre et/ou en aluminium et/ou en alliage comprenant du cuivre et/ou de l'aluminium et/ou **en ce que** le disque de bordure (6) est composé d'un matériau plus résistant que le disque principal (5).
